# EUROPEAN PATENT APPLICATION

(11) **EP 4 773 662 A1**
(43) Date of publication of application: **08.07.2026**
(21) Application number: 25220497.9
(22) Date of filing: 03.12.2025
(51) Int. Cl.: H04W 24/10, H04W 52/02

(54) **TERMINAL INCLUDING LOW-POWER RECEIVER AND MAIN RECEIVER, SERVING CELL COMMUNICATING WITH TERMINAL, AND COMMUNICATION SYSTEM INCLUDING THE SAME**

(30) Priority: 16.12.2024 KR 20240187662; 20.03.2025 KR 20250036213
(71) Applicant: Samsung Electronics Co., Ltd., Suwon-si, Gyeonggi-do 16677 (KR)
(72) Inventor: PARK, Jinwoong, 16677 Suwon-si (KR); CHONG, Dahae, 16677 Suwon-si (KR); KIM, Beomkon, 16677 Suwon-si (KR); DO, Joohyun, 16677 Suwon-si (KR)
(74) Representative: Marks & Clerk LLP

(57) **Abstract**

Provided is a terminal configured to communicate with a serving cell. The terminal includes: a radio frequency (RF) circuit including a low-power receiver and a main receiver; a memory configured to store first information indicating a performance of the low-power receiver; and a processor configured to determine an operation scheme for performing radio resource management (RRM) measurement using at least one of the low-power receiver and the main receiver based on the first information.

## Description

### BACKGROUND

The present disclosure relates to a terminal including a low-power receiver and a main receiver, a serving cell communicating with the terminal, and a communication system including the same.

Techniques, such as discontinuous reception (DRX) and extended discontinuous reception (eDRX), may be used to increase the wake-up period of a main receiver of a terminal, i.e., the paging cycle, to reduce power consumption consumed in paging reception operations. However, when the paging cycle is long, the paging reception by the main receiver may be delayed. For example, the long paging cycle may significantly reduce power consumption for paging reception operations, but it is not suitable for low-latency applications, such as emergency message reception. The operation, in which the main receiver of the terminal periodically wakes up at every DRX cycle to check whether a paging signal is present and demodulates the paging channel (PCH) to check whether the paging signal is actually present, is efficient in terms of delay rates but increases the power consumption of the terminal. Additionally, there may be false alarms in the PCH where the paging signal is not actually present, which results in wasted power in the terminal. To prevent this, techniques, such as early paging indication or subgrouping, have been proposed, but there are limits to improving the power usage efficiency of the terminal because the main receiver wakes up and performs the procedures required for paging.

To compensate for the above shortcomings, a low-power receiver of the terminal may be used to exclusively receive signals related to paging instructions. The low-power receiver may periodically receive a low-power wake-up signal and wake up the main receiver to perform paging when a wake-up instruction is present in the low-power wake-up signal. Because the low-power receiver has limited functionality compared to the main receiver, the low-power receiver consumes less power than the main receiver, even though the low-power receiver wakes up periodically.

### SUMMARY

One or more embodiments provide a terminal for effectively improving power usage efficiency by determining an operation scheme for a low-power receiver and a main receiver based on the performance of the low-power receiver related to radio resource management (RRM) measurement and performing RRM measurement based on the determined operation scheme, and a serving cell for transmitting a synchronization signal to the terminal according to the performance of the low-power receiver of the terminal.

According to an aspect of an embodiment, there is provided a terminal configured to communicate with a serving cell, the terminal including: a radio frequency (RF) circuit including a low-power receiver and a main receiver; a memory configured to store first information indicating a performance of the low-power receiver; and a processor configured to determine an operation scheme for performing radio resource management (RRM) measurement using at least one of the low-power receiver and the main receiver based on the first information.

According to another aspect of an embodiment, there is provided an operation method of a terminal in communication with a serving cell, the operation method including: determining an operation scheme for a low-power receiver and a main receiver based on first information indicating a performance of the low-power receiver; and performing RRM measurement using at least one of the low-power receiver and the main receiver, based on the determined operation scheme.

According to another aspect of an embodiment, there is provided an operation method of a communication system including a terminal and a serving cell in mutual communication, the operation method including: transmitting, by the terminal, performance information including first information indicating a performance of a low-power receiver of the terminal to the serving cell; determining, by the terminal, an operation scheme for performing RRM measurement using at least one of the low-power receiver and a main receiver of the terminal based on the first information; and determining, by the serving cell, a transmission scheme of transmitting a synchronization signal based on the first information.

According to another aspect of an embodiment, there is provided a terminal configured to communicate with a serving cell, the terminal including an RF circuit including a low-power receiver and a main receiver, and a processor configured to set a plurality of modes for the low-power receiver and the main receiver based on whether the low-power receiver supports a first RRM measurement for the serving cell and whether the low-power receiver supports a second RRM measurement for an intra-frequency neighboring cell, wherein the processor is configured to perform at least one of the first RRM measurement and the second RRM measurement, based on one of the plurality of modes, with the low-power receiver alone or together with the main receiver.

At least some of the above and other features of the invention are set out in the claims.

### BRIEF DESCRIPTION OF DRAWINGS

The above and other aspects and features will be more apparent from the following description of embodiments, taken in conjunction with the accompanying drawings, in which:
FIG. 1 is a block diagram of a wireless communication system according to an embodiment;
FIG. 2 is a schematic block diagram of a terminal according to an embodiment;
FIG. 3 is a flowchart of an operation method of the terminal, according to an embodiment;
FIG. 4 is a diagram of a first table describing low-power receiver information, according to an embodiment;
FIG. 5 is a flowchart of an operation method of the terminal, according to an embodiment;
FIG. 6 is a diagram of a second table describing low-power receiver information according to an embodiment;
FIGS. 7A, 7B, 7C, 7D and 7E are diagrams illustrating embodiments related to first to fifth modes included in an operation scheme, according to an embodiment;
FIG. 8 is a diagram of a third table describing an operation scheme, according to an embodiment;
FIG. 9 is a diagram illustrating an operation method of the terminal for controlling the low-power receiver and the main receiver based on the determined operation scheme, according to an embodiment;
FIG. 10 is a diagram of a fourth table describing a next mode that is switchable for each mode in an operation scheme, according to an embodiment;
FIG. 11 is a flowchart of an operation method of the terminal, according to an embodiment;
FIG. 12 is a flowchart of operation S310 in FIG. 11, according to an embodiment;
FIG. 13 is a diagram of a fifth table describing a switching condition monitored for switching from a current mode to a next mode, according to an embodiment;
FIG. 14 is a flowchart of an operation method of the terminal, according to an embodiment;
FIG. 15 is a flowchart of an operation method of the terminal, according to an embodiment;
FIGS. 16A and 16B are diagrams of a sixth table and a seventh table, respectively, describing a specific embodiment of operation S530 of FIG. 15;
FIG. 17 is a diagram of an eighth table describing low-power receiver information, according to an embodiment;
FIGS. 18A, 18B, 18C, 18D and 18E are diagrams describing an embodiment related to first to fifth modes included in an operation scheme, according to an embodiment;
FIG. 19 is a sequence diagram between a terminal and a serving cell, according to an embodiment; and
FIG. 20 is a block diagram of an electronic device according to an embodiment.

### DETAILED DESCRIPTION

Hereinafter, embodiments are described in detail with reference to the accompanying drawings. Embodiments described herein are example embodiments, and thus, the present disclosure is not limited thereto, and may be realized in various other forms. Each embodiment provided in the following description is not excluded from being associated with one or more features of another example or another embodiment also provided herein or not provided herein but consistent with the present disclosure. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

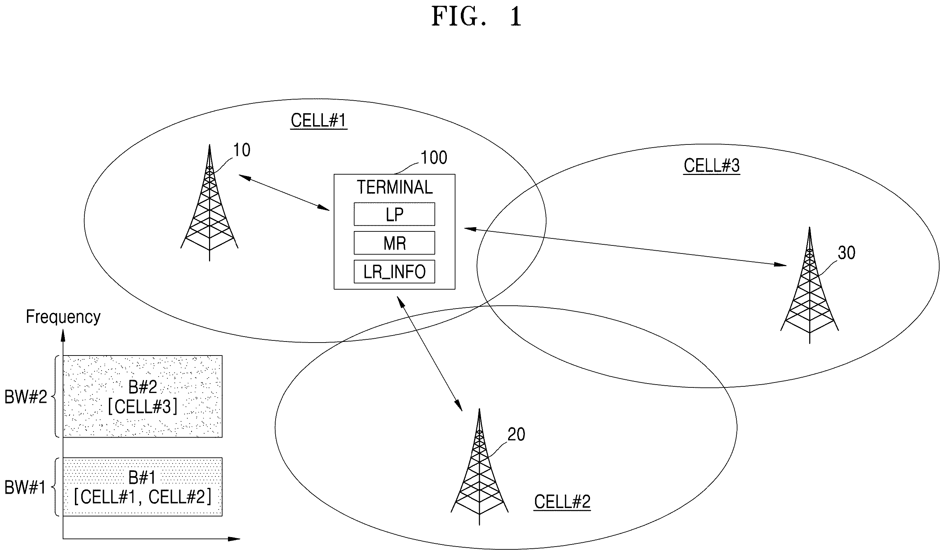

FIG. 1 is a block diagram of a wireless communication system according to an embodiment.

Hereinafter, embodiments are described in terms of a wireless communication system (WCS) based on a new radio (NR) network, in particular, a 3GPP release. However, embodiments are not limited to the NR network. Embodiments may also be applied to other wireless communication systems having a similar technical background or channel settings (e.g., a cellular communication system, such as long term evolution (LTE), LTE-advanced (LTE-A), wireless broadband (WiBro), global system for mobile communication (GSM), or next-generation communications including 6G, or a near field communication system, such as Bluetooth and near field communication (NFC)).

In addition, various functions described below may be implemented or supported by artificial intelligence technology or one or more computer programs, each of which is configured with computer-readable program code and is embodied in a computer-readable medium. The terms "application" and "program" refer to one or more computer programs, software components, instruction sets, procedures, functions, objects, classes, instances, related data, or portions thereof suitable for implementation of suitable computer-readable program code. The term "computer-readable program code" includes all kinds of computer code, including source code, object code, and executable code. The term "computer-readable medium" includes any type of medium that can be accessed by a computer, such as read-only memory (ROM), random-access memory (RAM), a hard disk drive, a compact disc (CD), a digital video disc (DVD), or any other type of memory. A "non-transitory" computer-readable medium excludes wired, wireless, optical, or other communication links that transmit transitory electrical or other signals. The non-transitory computer-readable medium includes a medium on which data can be permanently stored, and a medium on which data can be stored and later overwritten, such as a rewritable optical disk or an erasable memory device.

In the following embodiments, a hardware approach is described as an example. However, embodiments may be using both hardware and software.

Referring to FIG. 1, the WCS may include first to third base stations 10, 20, and 30 and a terminal 100. The first base station 10 may generally refer to a fixed station that communicates with the terminal 100 and/or the second and third base stations 20 and 30 and may exchange control information and data by communicating with the terminal 100, and/or the second and third base stations 20 and 30. For example, the first to third base stations 10, 20, and 30 may be referred to as a node B, an evolved-node B (eNB), a next generation node B (gNB), a sector, a site, a base transceiver system (BTS), an access point (AP), a relay node, a remote radio head (RRH), a radio unit (RU), a small cell, a wireless device, or a device. As an example, the first base station 10 may communicate with the terminal 100 through a first cell CELL#1, the second base station 20 may communicate with the terminal 100 through a second cell CELL#2, and the third base station 30 may communicate with the terminal 100 through a third cell CELL#3. However, although FIG. 1 illustrates that the first to third base stations 10, 20, and 30 provide the first to third cells CELL#1, CELL#2, and CELL#3, respectively, this is only an example and embodiments are not limited thereto. The first base station 10 may further provide at least one of the second cell CELL#2 and the third cell CELL#3.

The terminal 100 may be fixed or mobile and may refer to any devices capable of transmitting and receiving data and/or control information in communication with the first to third base stations 10, 20, and 30. For example, the terminal 100 may be referred to as user equipment, a mobile station, a mobile terminal, a user terminal, a wireless communication device, a wireless device, a device, a portable device, or a wearable device.

The terminal 100 may connect to the first cell CELL#1 to perform communication with the first cell CELL#1, and the first cell CELL#1 may be referred to as a serving cell. The serving cell CELL#1 may communicate with the terminal 100 by using a first frequency band B#1 having a first bandwidth BW#1.

The second cell CELL#2 may provide communication over the first frequency band B#1 as a neighboring cell to the first cell CELL#1. Herein, the second cell CELL#2 may provide communication using the same first frequency band B#1 as the serving cell CELL#1, and the second cell CELL#2 may be referred to as an intra-frequency neighboring cell.

The third cell CELL#3 may provide communication over a second frequency band B#2 as a neighboring cell to the first cell CELL#1. Herein, the third cell CELL#3 may provide communication using the second frequency band B#2 that is different from the serving cell CELL#1, and the third cell CELL#3 may be referred to as an inter-frequency neighboring cell or an inter-radio access technology (inter-RAT) neighboring cell.

The first bandwidth BW#1 of the first frequency band B#1 may be different from the second bandwidth BW#2 of the second frequency band B#2. As a specific example, the second frequency band B#2 may include a higher and wider band than the first frequency band B#1. However, this is merely an example, and it may be understood that embodiments are not limited thereto (e.g., the second frequency band B#2 may be lower and/or narrower than the first frequency band B#1).

In an embodiment, the terminal 100 may include a low-power receiver LR and a main receiver MR, and memory of the terminal 100 may store low-power receiver information LR_INFO indicating the performance of the low-power receiver LR. Herein, the low-power receiver information LR_INFO may also be referred to as first information.

In an embodiment, the low-power receiver LR may monitor a low power wake-up signal from the serving cell CELL#1 when the main receiver MR is in an idle state (or a standby state). An idle state (or a standby state) may be a state in which the main receiver MR is deactivated (or operates at reduced power consumption) to conserve energy, while the low-power receiver LR monitors for the low power wake-up signal. In the idle state, the main receiver MR may suspend one or more active communication functions. When the low-power receiver LR senses the low power wake-up signal, the main receiver MR may be woken to receive a paging message (or paging data). The main receiver MR may switch back to the idle state upon completing reception of data related to the paging message, and the low-power receiver LR may monitor the low power wake-up signal again.

In an embodiment, the terminal 100 may perform radio resource management (RRM) measurement by using at least one of the low-power receiver LR and the main receiver MR. The terminal 100 may determine, for the RRM measurement, an operation scheme for the low-power receiver LR and the main receiver MR based on the low-power receiver information LR_INFO. Herein, the RRM measurement may refer to measuring one or more parameters indicative of network conditions for use in managing radio resources. The RRM measurement may refer to measuring one or more parameters indicative of signal strength, interference and/or quality over a communication channel. For instance, the RRM measurement may refer to at least one of reference signal received power (RSRP), reference signal received quality (RSRQ), a signal to interference plus noise ratio (SINR), a carrier to interference plus noise ratio (CINR), and a channel quality indicator (CQI).

Herein, the RRM measurement may refer to a measurement operation performed by the terminal 100 to efficiently manage radio resources in a communication network. The result of the RRM measurement may be used for handover, network environment change detection, cell selection, cell reselection, network load distribution, network optimization, and quality improvement.

The performance of the low-power receiver LR in the RRM measurement may vary depending on the implementation thereof. As an example, the low-power receiver LR may be implemented to independently perform the RRM measurement for the serving cell CELL#1. As another example, the low-power receiver LR may be implemented to independently perform the RRM measurement for the serving cell CELL#1 and the RRM measurement for the intra-frequency neighboring cell CELL#2. As another example, the low-power receiver LR may be implemented to independently perform the RRM measurement for the serving cell CELL#1, the RRM measurement for the intra-frequency neighboring cell CELL#2, and the RRM measurement for the inter-frequency neighboring cell CELL#3. Furthermore, the low-power receiver LR may be implemented not to independently perform the RRM measurement. However, this is an example and embodiments are not limited thereto. The low-power receiver LR may be implemented to support more various types of RRM measurements. Herein, for convenience of description, the RRM measurement for the serving cell CELL#1 may be referred to as a first RRM measurement, the RRM measurement for the intra-frequency neighboring cell CELL#2 may be referred to as a second RRM measurement, and the RRM measurement for the inter-frequency neighboring cell CELL#3 may be referred to as a third RRM measurement. In addition, that the low-power receiver LR supports the independent RRM measurement may indicate that the low-power receiver LR is capable of providing a measurement performance sufficient to perform the RRM measurement on behalf of the main receiver MR. For instance, that the low-power receiver LR supports an RRM measurement may indicate that it is independently able to perform the RRM measurement (e.g., to perform the RRM measurement without use (e.g., operation, cooperation or input) of the main receiver MR). When the low-power receiver LR does not independently support an RRM measurement, it may still be involved in the RRM measurement in conjunction with the main receiver MR. For instance, the RRM measurement may include the measurement of different signals and/or different parameters (e.g., measurement of a low power wake-up signal, a low-power synchronization signal and/or a synchronization signal block (SSB)). Even where independent support for the RRM measurement is not provided by the low-power receiver LR, the low-power receiver LR may measure a subset of the signals or parameters for the RRM measurement, with other signals or parameters for the RRM measurement being measured by the main receiver MR. For instance, the low-power synchronization signal may be measured by the low-power receiver LR and the SSB may be measured by the main receiver MR.

In an embodiment, the low-power receiver information LR_INFO may refer to an RRM measurement type supported by the low-power receiver LR. As an example, the low-power receiver information LR_INFO may indicate which of the first to third RRM measurements is independently supported or which of the first to third RRM measurements is not independently supported.

In an embodiment, the operation scheme for the low-power receiver LR and the main receiver MR may be defined by a plurality of modes and switching conditions between the plurality of modes, as a scheme for performing the RRM measurement using at least one of the low-power receiver LR and the main receiver MR. A specific embodiment of the plurality of modes and the switching conditions is described below.

In an embodiment, the terminal 100 may control the low-power receiver LR and the main receiver MR based on the determined operation scheme according to the low-power receiver information LR_INFO to perform the RRM measurement for at least one of the serving cell CELL#1, the intra-frequency neighboring cell CELL#2, and the inter-frequency neighboring cell CELL#3.

The terminal 100, according to an embodiment, may effectively improve the power usage efficiency of the terminal 100 by determining the operation scheme for the RRM measurement considering the performance of the low-power receiver LR to increase the utilization of the low-power receiver LR.

In addition, the terminal 100, according to an embodiment, may effectively improve the performance of the RRM measurement by actively using the low-power receiver LR for the RRM measurement considering the performance of the low-power receiver LR related to the RRM measurement.

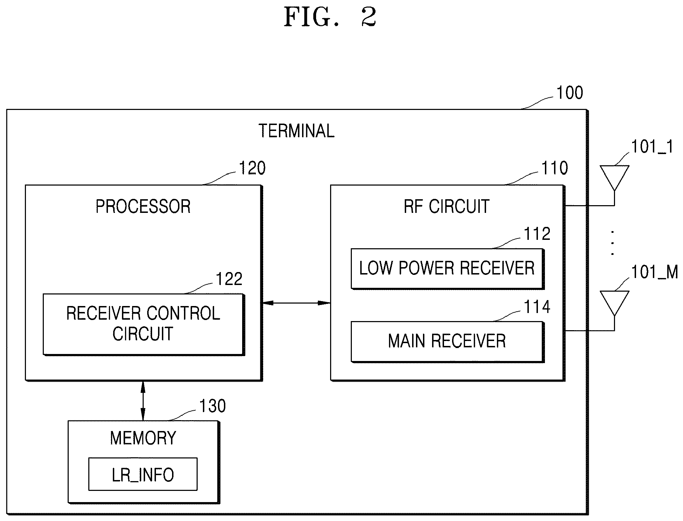

FIG. 2 is a schematic block diagram of the terminal 100 according to an embodiment.

Referring to FIG. 2, the terminal 100 may include a plurality of antennas 101_1 to 101_M, a radio frequency (RF) circuit 110, a processor 120, and memory 130. The implementation of the terminal 100 shown in FIG. 2 is merely an example and embodiments are not limited thereto. The terminal 100 may include more components. In addition, the RF circuit 110 may be referred to as an RF integrated circuit.

The RF circuit 110 may support a function for transmitting and receiving a signal using the plurality of antennas 101_1 to 101_M through a wireless channel. Specifically, the RF circuit 110 may generate an RF signal by performing a digital-to-analog conversion operation and a frequency up-conversion operation for a baseband signal provided from the processor 120, and may transmit the RF signal through the plurality of antennas 101_1 to 101_M. In addition, the RF circuit 110 may generate a baseband signal by performing a frequency down-conversion operation and an analog-to-digital conversion operation on the RF signal received through the plurality of antennas 101_1 to 101_M, and may provide the baseband signal to the processor 120.

As an example, the RF circuit 110 may include a transmit filter, a receive filter, a power amplifier, a low noise amplifier, a mixer, an oscillator, a digital-to-analog converter (DAC), and an analog-to-digital converter (ADC). In addition, the RF circuit 110 may further include a plurality of RF chains and may perform beamforming using the plurality of antennas 101_1 to 101_M. The RF circuit 110 may adjust the phase and magnitude of each of the signals transmitted and received through the plurality of antennas 101_1 to 101_M for beamforming. Furthermore, the RF circuit 110 may perform multi-input multi-output (MIMO) and may receive a plurality of layers when performing the MIMO operation.

In an embodiment, the RF circuit 110 may include a low-power receiver 112 and a main receiver 114. The low-power receiver 112 and the main receiver 114 may be controlled by a receiver control circuit 122, which will be described below, to perform a reception operation for the RF signal of the RF circuit 110. As an example, the low-power receiver 112 may be designed to support minimal functionality to perform a low power-based reception operation (e.g., a low-power reception operation), and the main receiver 114 may be designed to support high-speed data reception in a plurality of frequency bands. As an example, the low-power receiver 112 and the main receiver 114 may be implemented to have mutually separate hardware structures.

In an embodiment, the low-power receiver 112 may be designed to operate at lower power than the main receiver 114. Accordingly, a low power-based reception operation (e.g., a low-power reception operation) of the low-power receiver 112 may operate at a lower power than a reception operation of the main receiver 114. The low-power receiver 112 may be designed to be simpler than the main receiver 114. For example, the low-power receiver 112 may include fewer components (e.g., transistors) than the main receiver 114. In addition, in an embodiment, the low-power receiver 112 may be designed to be used in the RRM measurement to support the mobility of the terminal 100, even when the main receiver 114 is in an idle state.

In an embodiment, the low-power receiver 112 may have fewer types of signals supported for reception than the main receiver 114. As an example, the low-power receiver 112 may receive at least one of a low power wake-up signal, a low-power synchronization signal, a synchronization signal block (SSB), and the like, and the number of types of signals supported for reception may be limited to a maximum of three. In general, the term "low-power" herein may refer to a device, mode or component that operates at a lower power than a comparative device, mode or component, or a signal that is designed for detection or processing by a low-power device, mode or component. For instance, the low-power receiver 112 may operate at a lower power than the main receiver 114. Similarly, a low power wake-up signal and a low-power synchronization signal may be configured to be received and processed by the low-power receiver 112.

In an embodiment, the low-power receiver 112 may be implemented to support the independent RRM measurement without relying on the main receiver 114. As an example, the low-power receiver 112 may independently support at least one of the first RRM measurement for the serving cell, the second RRM measurement for the intra-frequency neighboring cell, and the third RRM measurement for the inter-frequency neighboring cell. In some embodiments, the low-power receiver 112 may not support the independent RRM measurement.

The processor 120 may control all operations for communication of the terminal 100. In an embodiment, the processor 120 may include the receiver control circuit 122. The receiver control circuit 122 may determine the operation scheme for the low-power receiver 112 and the main receiver 114 for the RRM measurement, based on the performance of the low-power receiver 112, and may control the low-power receiver 112 and the main receiver 114, based on the determined operation scheme. In FIG. 2, the receiver control circuit 122 is shown to be included in the processor 120 as a hardware component, but embodiments are not limited thereto. The receiver control circuit 122 may be implemented as a software configuration and stored in the memory 130 in the form of executable code executed by the processor 120. In some embodiments, the receiver control circuit 122 may be implemented as a combination of hardware and software.

The memory 130 may provide a memory space used for operations of the processor 120. In an embodiment, the memory 130 may store the low-power receiver information LR_INFO referenced by the receiver control circuit 122 to determine the operation scheme for the low-power receiver 112 and the main receiver 114 for the RRM measurement. As an example, the low-power receiver information LR_INFO may include information indicating the performance of the low-power receiver 112 related to the RRM measurement. In addition, as an example, the memory 130 may provide a memory space used for an operation of determining the operation scheme by the receiver control circuit 122 and a control operation based on the determined operation scheme.

In an embodiment, the receiver control circuit 122 may determine the operation scheme by setting the plurality of modes related to the low-power receiver 112 and the main receiver 114, based on the low-power receiver information LR_INFO, and setting the switching conditions between the plurality of modes.

In an embodiment, when the RRM measurement is required, the receiver control circuit 122 may select one of the plurality of modes of the operation scheme, and may control the low-power receiver 112 and the main receiver 114 based on the selected mode. Thereafter, the receiver control circuit 122 may periodically or aperiodically monitor whether the switching condition corresponding to the next mode to the selected mode is satisfied, and may switch the selected mode to the next mode when the switching condition is satisfied.

In some embodiments, the receiver control circuit 122 may further consider the performance of the serving cell related to the operation of the low-power receiver 112 together with the performance of the low-power receiver 112 to determine the operation scheme. As an example, second information indicating the performance of the serving cell may be stored in the memory 130 and may be referenced by the receiver control circuit 122. In a specific example, the performance of the serving cell may include elements, such as whether the serving cell supports transmission of the low-power synchronization signal. As an example, when the serving cell does not transmit the low-power synchronization signal and the low-power receiver 112 only supports the RRM measurement for the low-power synchronization signal, the performance of the serving cell may also be further considered to determine the operation scheme because the RRM measurement of the low-power receiver 112 may not be possible.

In addition, in an embodiment, the receiver control circuit 122 may modify the operation scheme determined based on at least one of a structure of the terminal 100 and a network environment of the terminal 100. As an example, third information indicating at least one of the structure of the terminal 100 and the network environment of the terminal 100 may be stored in the memory 130 and may be referenced by the receiver control circuit 122. As an example, the structure of the terminal 100 may include information on the configuration of one or both of the low-power receiver 112 and the main receiver 114. As a specific example, the structure of the terminal 100 may include elements, such as a connection relationship between the low-power receiver 112 and the main receiver 114, and whether the low-power receiver 112 and the main receiver 114 share the antennas 101_1 to 101_M. In addition, the network environment of the terminal 100 may include elements that directly or indirectly indicate the network quality, such as a communication state between the terminal 100 and the serving cell, a movement of the terminal 100, and a power state of the terminal 100. As an example, the receiver control circuit 122 may deactivate at least one next mode corresponding to at least one of the plurality of modes of the operation scheme based on at least one of the structure of the terminal 100 and the network environment of the terminal 100. As an example, the receiver control circuit 122 may deactivate some of the plurality of modes of the operation scheme based on at least one of the structure of the terminal 100 and the network environment of the terminal 100. Considering the deactivated modes, the receiver control circuit 122 may control the low-power receiver 112 and the main receiver 114 based on the other modes.

The terminal 100, according to an embodiment, may effectively operate the low-power receiver 112 and the main receiver 114 by determining or modifying the operation scheme by further considering at least one of the performance of the serving cell related to the operation of the low-power receiver 112, the structure of the terminal 100, and the network environment of the terminal 100, together with the performance of the low-power receiver 112.

The operation of the receiver control circuit 122 described with reference to FIG. 2 may be comprehensively understood as the operation of the processor 120 or the operation of the terminal 100.

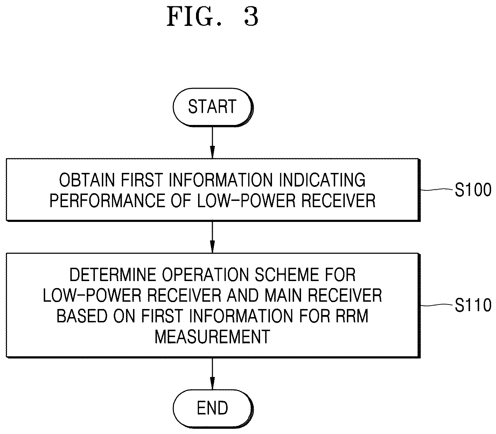

FIG. 3 is a flowchart of an operation method of the terminal, according to an embodiment.

Referring to FIG. 3, in operation S100, the terminal may obtain first information indicating the performance of the low-power receiver. As an example, the terminal may access the first information stored in the memory to refer to the first information.

In addition, in operation S110, the terminal may determine the operation scheme for the low-power receiver and the main receiver based on the first information, for the RRM measurement. As an example, the terminal may determine the operation scheme by setting the plurality of modes related to the low-power receiver and the main receiver based on the first information and setting the switching conditions between the plurality of modes.

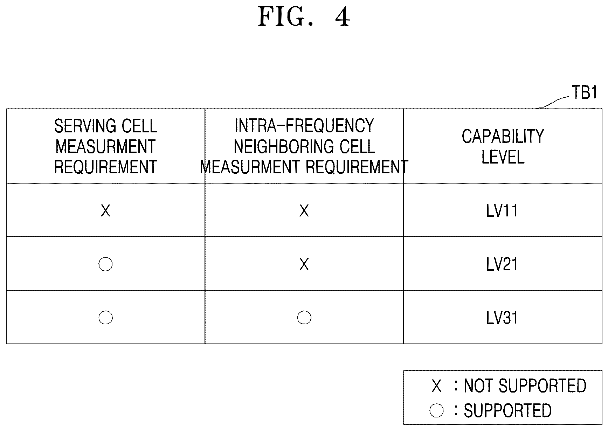

FIG. 4 is a diagram of a first table TB1 describing low-power receiver information, according to an embodiment. In FIG. 4, embodiments are described assuming that the low-power receiver supports the RRM measurement for the low-power synchronization signal and the RRM measurement for the SSB. However, this is only an example, and it may be fully understood that embodiments are not limited thereto.

Referring to FIG. 4, the first table TB1 may include a serving cell measurement requirement field, an intra-frequency neighboring cell measurement requirement field, and a capability level field.

As an example, the serving cell measurement requirement field may include a field indicating whether the low-power receiver supports the first RRM measurement for the serving cell (e.g., independently supports the first RRM measurement). The intra-frequency neighboring cell measurement requirement field may include a field indicating whether the low-power receiver supports the second RRM measurement for the intra-frequency neighboring cells (e.g., independently supports the second RRM measurement). The capability level field may include a field indicating the performance of the low-power receiver related to the RRM measurement.

As an example, when the low-power receiver does not support the first RRM measurement and the second RRM measurement, the capability level may correspond to a first level LV11. When the low-power receiver supports only the first RRM measurement, the capability level may correspond to a second level LV21. In addition, when the low-power receiver supports the first RRM measurement and the second RRM measurement, the capability level may correspond to a third level LV31.

In an embodiment, the low-power receiver information may refer to one of the first to third levels LV11, LV21, and LV31, and the terminal may identify the performance of the low-power receiver related to the RRM measurement, based on the low-power receiver information. The performance of the low-power receiver may be defined to decrease in the order of the third level LV31, the second level LV21, and the first level LV11. For example, performance of the second level LV21 may be less than a performance the third level LV31, and greater than a performance of the first level LV11.

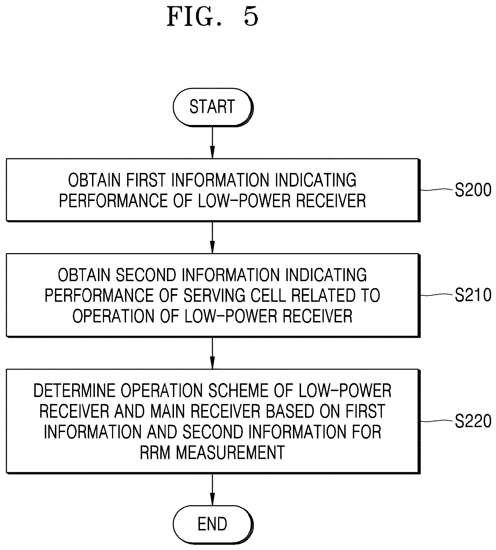

FIG. 5 is a flowchart of an operation method of the terminal, according to an embodiment.

Referring to FIG. 5, in operation S200, the terminal may obtain the first information indicating the performance of the low-power receiver. As an example, the terminal may access the first information stored in the memory to refer to the first information.

In operation S210, the terminal may obtain the second information indicating the performance of the serving cell related to the operation of the low-power receiver. As an example, the terminal may access the second information stored in the memory to refer to the second information.

In addition, in operation S220, the terminal may determine the operation scheme of the low-power receiver and the main receiver, based on the first information and the second information, for the RRM measurement. As an example, the terminal may determine the operation scheme by setting the plurality of modes related to the low-power receiver and the main receiver based on the first information and the second information, and setting the switching conditions between the plurality of modes.

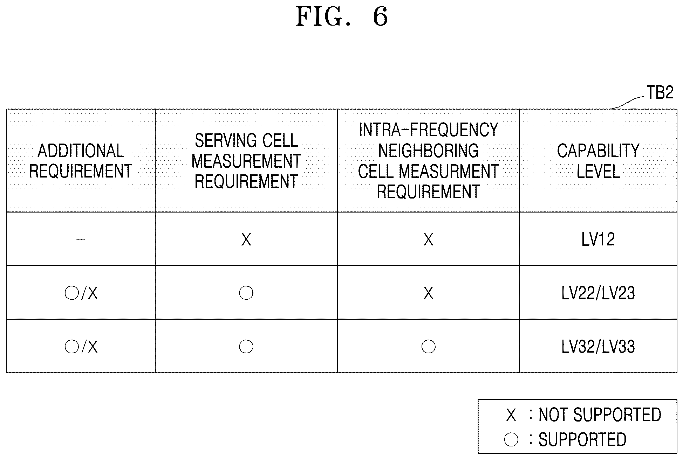

FIG. 6 is a diagram of a second table TB2 describing low-power receiver information according to an embodiment. In FIG. 6, embodiments are described assuming that the performance of the serving cell relates to whether to support transmission of the low-power synchronization signal and that the serving cell does not support transmission of the lower-power synchronization signal. However, this is only an example, and it may be fully understood that embodiments are not limited thereto.

Referring to FIG. 6, the second table TB2 may include an additional requirement field, a serving cell measurement requirement field, an intra-frequency neighboring cell measurement requirement field, and a capability level field. As an example, the additional requirement field may be based on the first information of FIG. 4.

As an example, the additional requirement field may include a field indicating whether the low-power receiver supports the RRM measurement for the SSB, in addition to the RRM measurement for the low-power synchronization signal. The serving cell measurement requirement field may include a field indicating whether the low-power receiver supports the first RRM measurement for the serving cell. The intra-frequency neighboring cell measurement requirement field may include a field indicating whether the low-power receiver supports the second RRM measurement for the intra-frequency neighboring cell. The capability level field may include a field indicating the performance of the low-power receiver related to the RRM measurement.

For example, when the low-power receiver does not support the first RRM measurement and the second RRM measurement, the capability level may correspond to a first level LV12. When the low-power receiver supports the RRM measurement for the low-power synchronization signal and the RRM measurement for the SSB and only supports the first RRM measurement for the low-power synchronization signal or the SSB, the capability level may correspond to a second level LV22. When the low-power receiver does not support the RRM measurement for the SSB other than the RRM measurement for the low-power synchronization signal and only supports the first RRM measurement for the low-power synchronization signal, the capability level may correspond to a third level LV23. When the low-power receiver supports the RRM measurement for the low-power synchronization signal and the RRM measurement for the SSB and supports the first RRM measurement and the second RRM measurement for the low-power synchronization signal or the SSB, the capability level may correspond to a fourth level LV32. In addition, when the low-power receiver does not support the RRM measurement for the SSB other than the RRM measurement for the low-power synchronization signal and supports the first RRM measurement and the second RRM measurement for the low-power synchronization signal, the capability level may correspond to a fifth level LV33.

In an embodiment, the low-power receiver information may refer to one of the first to fifth levels LV12, LV22, LV23, LV32, and LV33, and the terminal may identify the performance of the low-power receiver related to the RRM measurement based on the low-power receiver information.

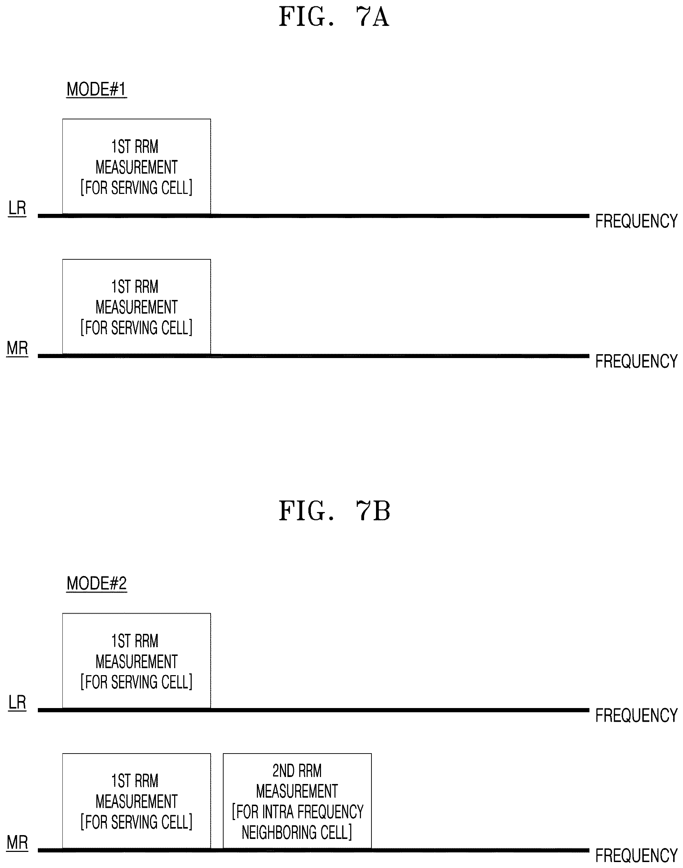

FIGS. 7A to 7E are diagrams describing embodiments related to first to fifth modes MODE#1 to MODE#5 included in the operation scheme, according to an embodiment. At least two of the first to fifth modes MODE#1 to MODE#5 may be set and included in the operation scheme, based on the low-power receiver information described with reference to FIG. 4.

Referring to FIG. 7A, in the first mode MODE#1, the low-power receiver LR may perform the first RRM measurement for the serving cell, and the main receiver MR may perform the first RRM measurement for the serving cell. As an example, the low-power receiver LR may perform the first RRM measurement for the low-power synchronization signal or the SSB received from the serving cell, and the main receiver MR may perform the first RRM measurement for the SSB received from the serving cell. As an example, the first RRM measurement of the low-power receiver LR may be performed in parallel or alternately with the first RRM measurement of the main receiver MR. In some embodiments, the main receiver MR may perform the first RRM measurement for the low-power synchronization signal received from the serving cell.

With further reference to FIG. 7B, in the second mode MODE#2, the low-power receiver LR may perform the first RRM measurement for the serving cell, and the main receiver MR may perform the first RRM measurement for the serving cell and the second RRM measurement for the intra-frequency neighboring cell. As an example, the low-power receiver LR may perform the first RRM measurement for the low-power synchronization signal or the SSB received from the serving cell, and the main receiver MR may perform the first RRM measurement for the SSB received from the serving cell and the second RRM measurement for the SSB received from the intra-frequency neighboring cell. As an example, the first RRM measurement of the low-power receiver LR may be performed in parallel or alternately with one of the first RRM measurement and the second RRM measurement of the main receiver MR. In some embodiments, the main receiver MR may perform the first RRM measurement for the low-power synchronization signal received from the serving cell and may perform the second RRM measurement for the low-power synchronization signal received from the intra-frequency neighboring cell. In FIG. 7B, a frequency domain where the first RRM measurement is arranged is different from a frequency domain where the second RRM measurement is arranged, so as to indicate that the center frequency of the low-power synchronization signal or the SSB received from the serving cell is different from the center frequency of the SSB received from the intra-frequency neighboring cell.

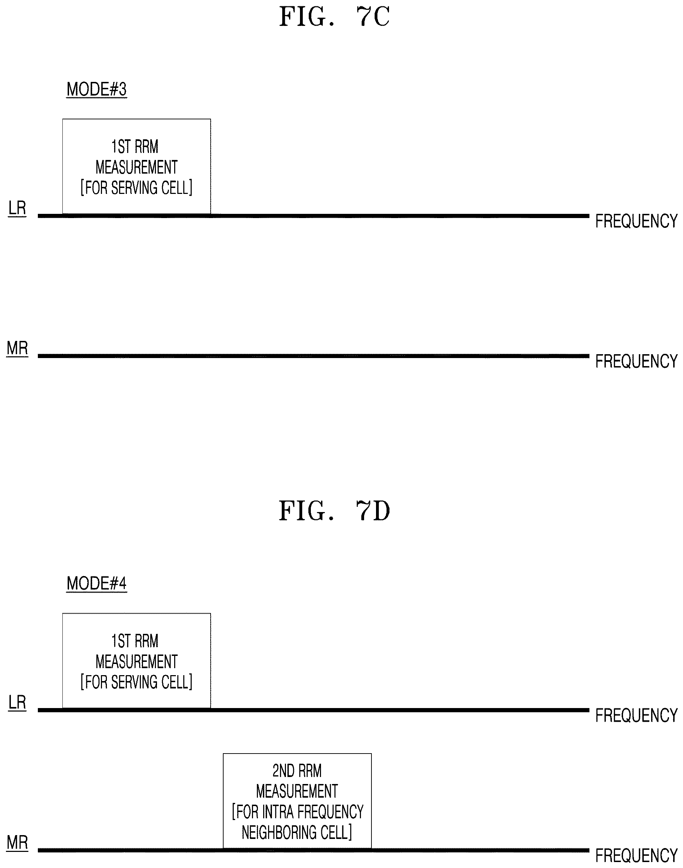

With further reference to FIG. 7C, in the third mode MODE#3, the low-power receiver LR may perform the first RRM measurement for the serving cell, and the main receiver MR may perform another reception operation or may be in an idle state. In one example, the low-power receiver LR may perform the first RRM measurement for the low-power synchronization signal or the SSB received from the serving cell.

Referring further to FIG. 7D, in the fourth mode MODE#4, the low-power receiver LR may perform the first RRM measurement for the serving cell, and the main receiver MR may perform the second RRM measurement for the intra-frequency neighboring cell. As an example, the low-power receiver LR may perform the first RRM measurement for the low-power synchronization signal or the SSB received from the serving cell, and the main receiver MR may perform the second RRM measurement for the SSB received from the intra-frequency neighboring cell. As an example, the first RRM measurement of the low-power receiver LR may be performed in parallel or alternately with the second RRM measurement of the main receiver MR. In some embodiments, the main receiver MR may perform the second RRM measurement for the low-power synchronization signal received from the intra-frequency neighboring cell.

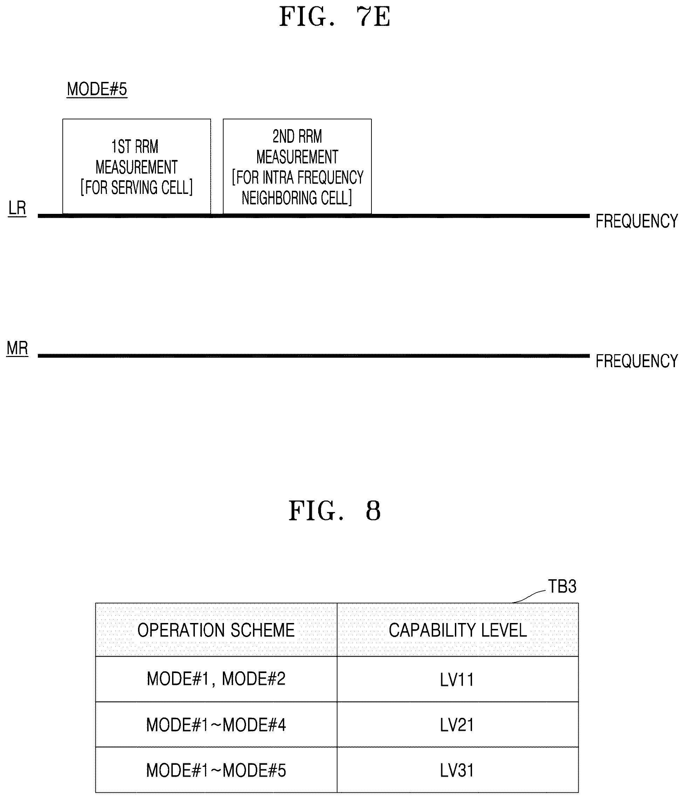

With further reference to FIG. 7E, in the fifth mode MODE#5, the low-power receiver LR may perform the first RRM measurement for the serving cell and the second RRM measurement for the intra-frequency neighboring cell, and the main receiver MR may perform another reception operation or may be in an idle state. As an example, the low-power receiver LR may perform the first RRM measurement for the low-power synchronization signal or the SSB received from the serving cell and perform the second RRM measurement for the low-power synchronization signal or the SSB received from the intra-frequency neighboring cell.

The first mode MODE#1 may ensure improved performance for the first RRM measurement for the serving cell, compared to the third mode MODE#3. The second mode MODE#2, which is a mode in which the first mode MODE#1 and the fourth mode MODE#4 are combined, may provide improved performance for the first RRM measurement for the serving cell and the fast operations for handover or cell reselection. The fourth mode MODE#4 may perform the operations for handover or cell reselection faster than the third mode MODE#3. The third mode MODE#3 and the fifth mode MODE#5 may minimize power consumption because the main receiver MR is not used for the RRM measurement.

FIG. 8 is a diagram of a third table TB3 describing an operation scheme, according to an embodiment. In FIG. 8, the operation scheme determined assuming an embodiment described with reference to FIG. 4 is shown. It is also assumed that first to fifth modes MODE#1 to MODE#5 correspond to the modes described with reference to FIGS. 7A to 7E.

Referring to FIG. 8, the third table TB3 may include an operation scheme field and a capability level field.

As an example, the operation scheme field may include a field indicating set modes related to the low-power receiver and the main receiver. The capability level field may include a field indicating the performance of the low-power receiver related to the RRM measurement.

As an example, when the performance of the low-power receiver is the first level LV11, the operation scheme may be determined by setting the first mode MODE#1 and the second mode MODE#2. For example, the set operation scheme may include the first mode MODE#1 and the second mode MODE#2. When the performance of the low-power receiver is the second level LV21, the operation scheme may be determined by setting the first to fourth modes MODE#1 to MODE#4. For example, the set operation scheme may include the first to fourth modes MODE#1 to MODE#4. In addition, when the performance of the low-power receiver is the third level LV31, the operation scheme may be determined by setting the first to fifth modes MODE#1 to MODE#5. For example, the set operation scheme may include the first to fifth modes MODE#1 to MODE#5.

In an embodiment, the terminal may control the low-power receiver and the main receiver to operate based on one of the modes set in the operation scheme. For example, the terminal may control the low-power receiver and the main receiver to operate based on one of the first mode MODE#1 and the second mode MODE#2 when the performance of the low-power receiver is the first level LV11. The terminal may control the low-power receiver and the main receiver to operate based on one of the first to fourth modes MODE#1 to MODE#4 when the performance of the low-power receiver is the second level LV21. In addition, the terminal may control the low-power receiver and the main receiver to operate based on one of the first to fifth modes MODE#1 to MODE#5 when the performance of the low-power receiver is the third level LV31.

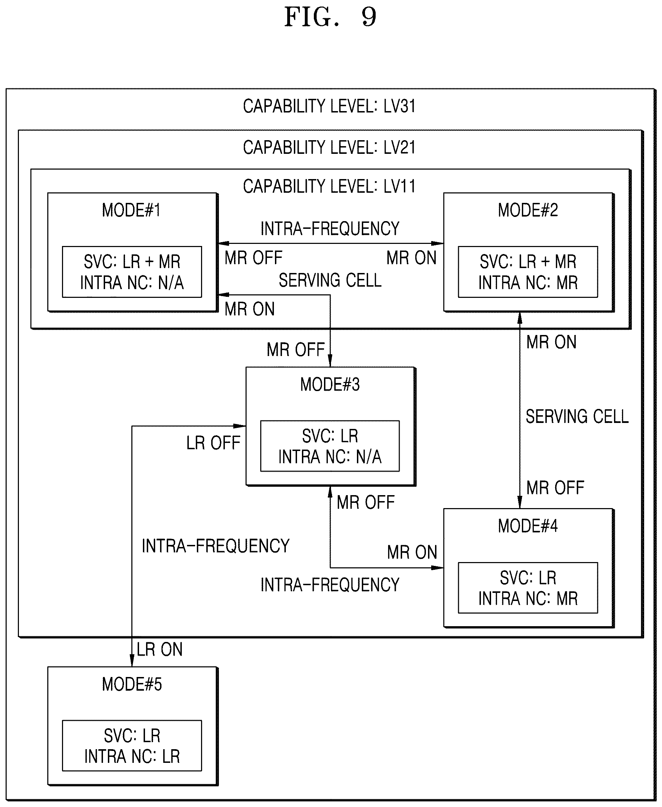

FIG. 9 is a diagram illustrating an operation method of the terminal for controlling the low-power receiver LR and the main receiver MR based on the determined operation scheme, according to an embodiment. FIG. 9 may be based on embodiments described with reference to FIGS. 4, 7A to 7E, and 8.

Referring to FIG. 9, when the performance of the low-power receiver is the first level LV11, the terminal may control the low-power receiver LR and the main receiver MR based on one of the first mode MODE#1 and the second mode MODE#2. When the performance of the low-power receiver is the second level LV21, the terminal may control the low-power receiver LR and the main receiver MR based on one of the first to fourth modes MODE#1 to MODE#4. In addition, when the performance of the low-power receiver is the third level LV31, the terminal may control the low-power receiver LR and the main receiver MR based on one of the first to fifth modes MODE#1 to MODE#5.

As an example, in the first mode MODE#1, the low-power receiver LR and the main receiver MR may perform the first RRM measurement for the serving cell SVC. In the second mode MODE#2, the low-power receiver LR and the main receiver MR may perform the first RRM measurement for the serving cell SVC, and the main receiver MR may perform the second RRM measurement for the intra-frequency neighboring cell INTRA NC. In the third mode MODE#3, the low-power receiver LR may perform the first RRM measurement for the serving cell SVC. In the fourth mode MODE#4, the low-power receiver LR may perform the first RRM measurement for the serving cell SVC, and the main receiver MR may perform the second RRM measurement for the intra-frequency neighboring cell INTRA NC. In addition, in the fifth mode MODE#5, the low-power receiver LR may perform the first RRM measurement for the serving cell SVC and the second RRM measurement for the intra-frequency neighboring cell INTRA NC.

As an example, the switching between the first mode MODE#1 and the second mode MODE#2 may be performed by turning the main receiver MR on or off in the second RRM measurement for the intra-frequency neighboring cell INTRA NC. In FIG. 9, the fact that a specific receiver is turned on in a specific RRM measurement indicates that the specific receiver is controlled to perform the specific RRM measurement, and the fact that the specific receiver is turned off in the specific RRM measurement may indicate that the specific receiver is controlled not to perform the specific RRM measurement. When the specific receiver is turned off in the specific RRM measurement, the specific receiver may be switched to an idle state or may perform a reception operation other than the specific RRM measurement.

As an example, the switching between the first mode MODE#1 and the third mode MODE#3 may be performed by turning the main receiver MR on or off in the first RRM measurement for the serving cell SVC. For instance, when switching from the third mode MODE#3 to the first mode MODE#1 the main receiver MR may be turned on for the purposes of the first RRM measurement for the serving cell SVC.

As an example, the switching between the second mode MODE#2 and the fourth mode MODE#4 may be performed by turning the main receiver MR on or off in the first RRM measurement for the serving cell SVC. For instance, when switching from the fourth mode MODE#4 to the second mode MODE#2 the main receiver MR may be turned on for the purposes of the first RRM measurement for the serving cell SVC.

As an example, the switching between the third mode MODE#3 and the fourth mode MODE#4 may be performed by turning the main receiver MR off or on in the second RRM measurement for the intra-frequency neighboring cell INTRA NC. For instance, when switching from the third mode MODE#3 to the fourth mode MODE#4 the main receiver MR may be turned on for the purposes of the second RRM measurement for the intra-frequency neighboring cell INTRA NC.

In addition, as an example, the switching between the third mode MODE#3 and the fifth mode MODE#5 may be performed by turning the low-power receiver LR off or on in the second RRM measurement for the intra-frequency neighboring cell INTRA NC. For instance, when switching from the third mode MODE#3 to the fifth mode MODE#5 the low-power receiver LR may be turned on for the purposes of the second RRM measurement for the intra-frequency neighboring cell INTRA NC.

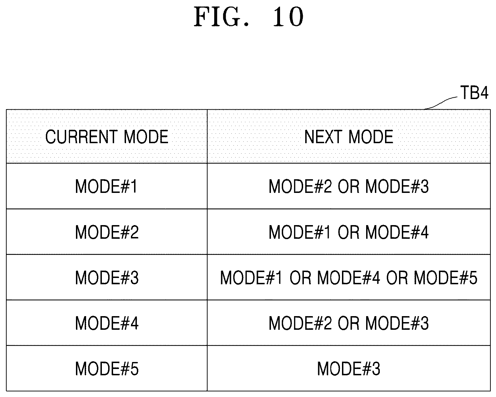

FIG. 10 is a diagram of a fourth table TB4 describing a next mode that is switchable for each mode in an operation scheme, according to an embodiment. FIG. 10 may be based on an embodiment described with reference to FIG. 9.

Referring to FIG. 10, the fourth table TB4 may include a current mode field and a next mode field.

As an example, the current mode field may include a field indicating a mode currently selected for control over the low-power receiver and the main receiver. In addition, the next mode field may include a field indicating next modes that are switchable from the currently selected mode.

As an example, when the first mode MODE#1 is the current mode, the next mode may correspond to the second mode MODE#2 or the third mode MODE#3.

As an example, when the second mode MODE#2 is the current mode, the next mode may correspond to the first mode MODE#1 or the fourth mode MODE#4.

As an example, when the third mode MODE#3 is the current mode, the next mode may correspond to the first mode MODE#1, the fourth mode MODE#4, or the fifth mode MODE#5.

As an example, when the fourth mode MODE#4 is the current mode, the next mode may correspond to the second mode MODE#2 or the third mode MODE#3.

In addition, as an example, when the fifth mode MODE#5 is the current mode, the next mode may correspond to the third mode MODE#3.

In an embodiment, the terminal may set the switching conditions between the first to fifth modes MODE#1 to MODE#5, and the terminal may monitor whether the switching condition corresponding to the next mode to the current mode (e.g., for switching from the current mode to the next mode) is satisfied. The terminal may switch the current mode to the next mode when the corresponding switching condition is satisfied. Specific examples thereof are described below.

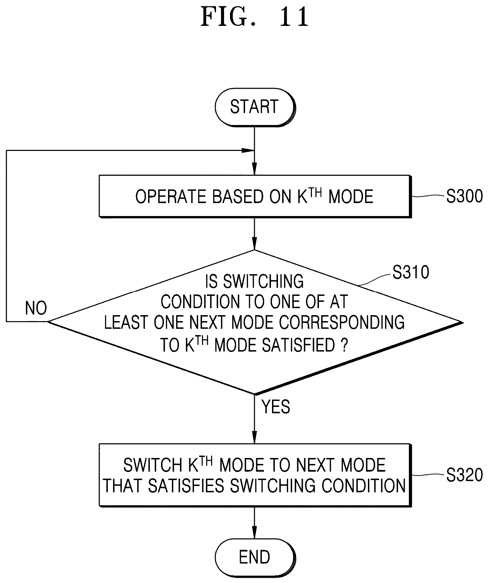

FIG. 11 is a flowchart of an operation method of the terminal, according to an embodiment.

Referring to FIG. 11, in operation S300, the terminal may operate based on a K^{TH} mode. As an example, the terminal may control the low-power receiver and the main receiver based on the K^{TH} mode to perform the RRM measurement. The K^{TH} mode may be referred to as the current mode.

In operation S310, the terminal may determine whether the switching condition to one of at least one next mode corresponding to the K^{TH} mode is satisfied. As an example, the terminal may identify at least one next mode corresponding to the K^{TH} mode that is the current mode, because the next mode that is switchable may vary depending on the current mode, as shown in FIG. 10, and may determine whether the switching condition corresponding to the identified next mode is satisfied.

When operation S310 is "YES", the terminal may switch the K^{TH} mode to the next mode that satisfies the switching condition in operation S320.

In addition, when operation S310 is NO, operation S300 may be repeated.

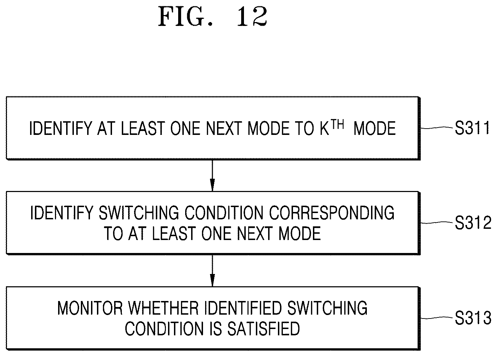

FIG. 12 is a flowchart of a specific embodiment of operation S310 in FIG. 11.

Referring to FIG. 12, operation S310 of FIG. 11 may include operations S311 to S313.

In operation S311, the terminal may identify at least one next mode to the K^{TH} mode from among the plurality of modes.

In operation S312, the terminal may identify the switching condition corresponding to the at least one next mode.

In addition, in operation S313, the terminal may monitor whether the identified switching condition is satisfied.

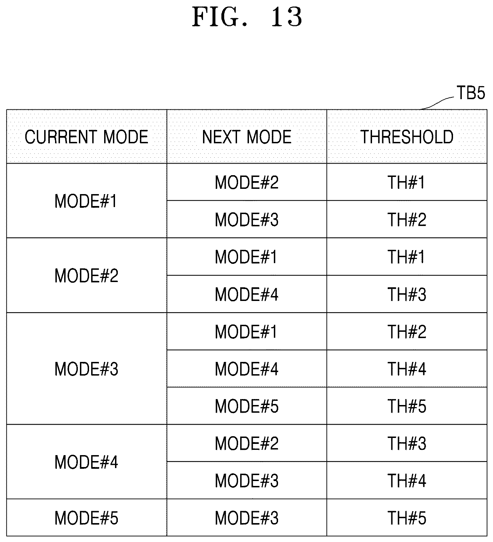

FIG. 13 is a diagram of a fifth table TB5 describing the switching condition monitored for switching from a current mode to a next mode, according to an embodiment. FIG. 13 may be based on an embodiment described with reference to FIG. 10.

Referring to FIG. 13, the fifth table TB5 may include a current mode field, a next mode field, and a threshold field.

As an example, the current mode field may include a field indicating a mode currently selected for control over the low-power receiver and the main receiver. The next mode field may include a field indicating the next modes that are switchable from the currently selected mode. In addition, the threshold field may include a field indicating a threshold corresponding to the switching condition (e.g., for switching from a current mode to a corresponding next mode). The switching condition may apply a threshold to a measurement result. The measurement result may be based on one or both of a result of a first RRM measurement by the low-power receiver LR and a result of the second RRM measurement by the main receiver MR. For instance, the measurement result may be indicative of a signal strength, interference and/or quality of a communication channel between the terminal and the serving cell. Accordingly, the terminal may switch between modes based on network conditions (e.g., signal strength, interference and/or quality of signals received from the serving cell).

For example, the switching condition between the first mode MODE#1 and the second mode MODE#2 may be set based on a first threshold TH#1. The switching condition between the first mode MODE#1 and the third mode MODE#3 may be set based on a second threshold TH#2. The switching condition between the second mode MODE#2 and the fourth mode MODE#4 may be set based on a third threshold TH#3. The switching condition between the third mode MODE#3 and the fourth mode MODE#4 may be set based on a fourth threshold TH#4. In addition, the switching condition between the third mode MODE#3 and the fifth mode MODE#5 may be set based on a fifth threshold TH#5. When the direction of switching between modes is reversed, the direction of the switching condition (e.g., greater than or less than the threshold) may be reversed. For instance, when switching between the first mode MODE#1 and the second mode MODE#2, the first mode MODE#1 may be selected when the measurement result is greater than or equal to the first threshold TH#1 and the second mode MODE#2 may be selected when the measurement result is less than the first threshold TH#1. In addition, while FIG. 13 shows the same threshold applied in either direction of switching, an offset may be added to the threshold to provide hysteresis. For instance, the threshold for switching from the first mode MODE#1 to the second mode MODE#2 may be less than the threshold for switching from the second mode MODE#2 to the first mode MODE#1.

For example, the first to fifth thresholds TH#1 to TH#5 may be variously combined to set switching conditions between the first to fifth modes MODE#1 to MODE#5.

In an embodiment, when the current mode is the first mode MODE#1, the terminal may perform a monitoring operation based on the first threshold TH#1 and the second threshold TH#2 corresponding to the second mode MODE#2 and the third mode MODE#3, respectively, which can be the next modes. Specific embodiments thereof are described below.

However, FIG. 13 is only an example and embodiments are not limited thereto. The switching condition between modes may be variously set.

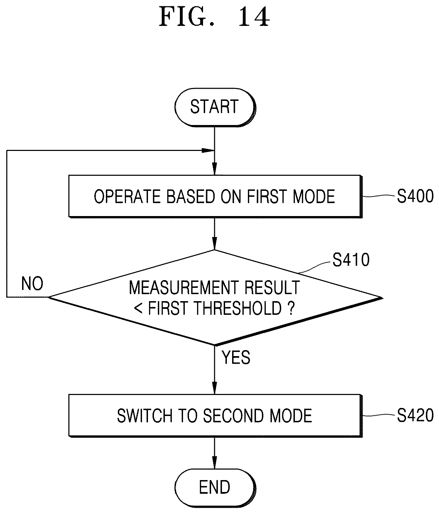

FIG. 14 is a flowchart of an operation method of the terminal, according to an embodiment. FIG. 14 may be based on an embodiment described with reference to FIGS. 7A and 13.

Referring to FIG. 14, in operation S400, the terminal may operate based on the first mode MODE#1. As an example, based on the first mode MODE#1, the terminal may control the low-power receiver LR to perform the first RRM measurement for the serving cell and may control the main receiver MR to perform the first RRM measurement for the serving cell.

In operation S410, the terminal may determine whether the measurement result of operation S400 is less than the first threshold TH#1 corresponding to the second mode MODE#2. As an example, the measurement result may be generated by a combination of a result of the first RRM measurement by the low-power receiver LR with a result of the second RRM measurement by the main receiver MR. For instance, the measurement result may be a (e.g., weighted) sum or average of the first RRM measurement by the low-power receiver LR with a result of the second RRM measurement by the main receiver MR.

When operation S410 is "YES", the terminal may switch the first mode MODE#1 to the second mode MODE#2 in operation S420.

In addition, when operation S410 is "NO", operation S400 may be repeated.

The features of FIG. 14 may be applied identically or similarly even when the current mode is the second to fifth modes MODE#2 to MODE#5, and a detailed description thereof is omitted.

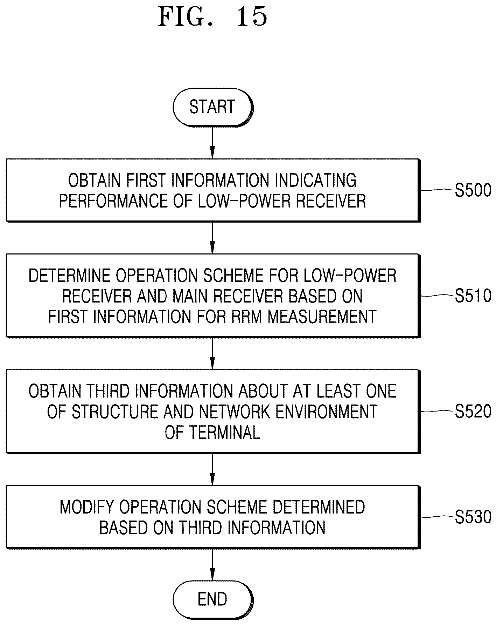

FIG. 15 is a flowchart of an operation method of the terminal, according to an embodiment.

Referring to FIG. 15, in operation S500, the terminal may obtain first information indicating the performance of the low-power receiver. As an example, the terminal may access the first information stored in the memory to refer to the first information. As an example, the first information may be stored in the memory in advance during mass production of the terminal.

Referring to operation S510, the terminal may determine the operation scheme for the low-power receiver and the main receiver based on the first information for the RRM measurement. As an example, the terminal may determine the operation scheme by setting the plurality of modes related to the low-power receiver and the main receiver, based on the first information, and setting switching conditions between the plurality of modes.

Referring to operation S520, the terminal may obtain third information about at least one of the structure and the network environment of the terminal. As an example, the terminal may access the third information stored in the memory to refer to the third information. As an example, the third information may be stored in the memory in advance during mass production of the terminal or may be generated by the terminal and stored in the memory. As a specific example, the structure of the terminal may include elements, such as a connection relationship between the low-power receiver and the main receiver of the terminal, and whether the low-power receiver 112 and the main receiver 114 share an antenna. The network environment of the terminal may include elements that directly or indirectly indicate the network quality, such as the communication state between the terminal and the serving cell, the movement of the terminal, and the power state of the terminal.

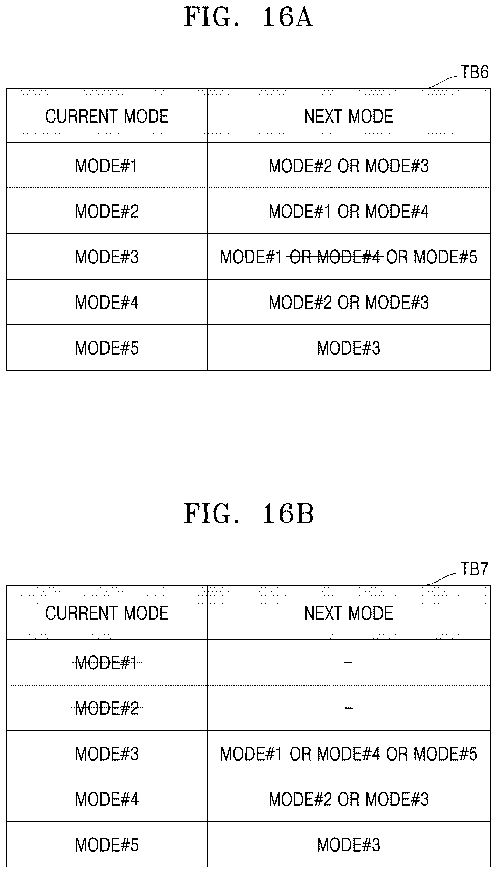

In operation S530, the terminal may modify the operation scheme determined in operation S510 based on the third information. As an example, the terminal may deactivate at least one next mode corresponding to at least one of the plurality of modes of the operation scheme based on at least one of the structure of the terminal and the network environment of the terminal. A detailed description thereof is given with reference to FIG. 16A. As an example, the terminal may deactivate some of the plurality of modes of the operation scheme based on at least one of the structure of the terminal and the network environment of the terminal. A detailed description thereof is given with reference to FIG. 16B.

FIGS. 16A and 16B are diagrams of a sixth table TB6 and a seventh table TB7, respectively, describing a specific embodiment of operation S530 of FIG. 15. In FIGS. 16A and 16B, it is assumed that the capability level of the terminal corresponds to the third level LV31 in FIG. 9, and the terminal sets the first to fifth modes MODE#1 to MODE#5 as the operation scheme for the RRM measurement.

Referring to the sixth table TB6 of FIG. 16A, the terminal may deactivate the fourth mode MODE#4 that is a next mode to the third mode MODE#3 and the second mode MODE#2 that is a next mode to the fourth mode MODE#4, based on at least one of the structure of the terminal and the network environment of the terminal. That is, the terminal may prevent switching between the second mode MODE#2 and the fourth mode MODE#4. Accordingly, when the current mode is the third mode MODE#3, the terminal may monitor the switching condition corresponding to the first mode MODE#1 and the switching condition corresponding the fifth mode MODE#5 to switch modes. In addition, when the current mode is the fourth mode MODE#4, the terminal may monitor the switching condition corresponding to the third mode MODE#3 to switch modes.

With further reference to the seventh table TB7 in FIG. 16B, the terminal may deactivate the first mode MODE#1 and the second mode MODE#2 based on at least one of the structure of the terminal and the network environment of the terminal. Accordingly, the terminal may control the low-power receiver and the main receiver based on (e.g., only on) the third to fifth modes MODE#3, MODE#4, and MODE#5.

However, because FIGS. 16A and 16B are merely examples, it may be fully understood that embodiments are not limited thereto.

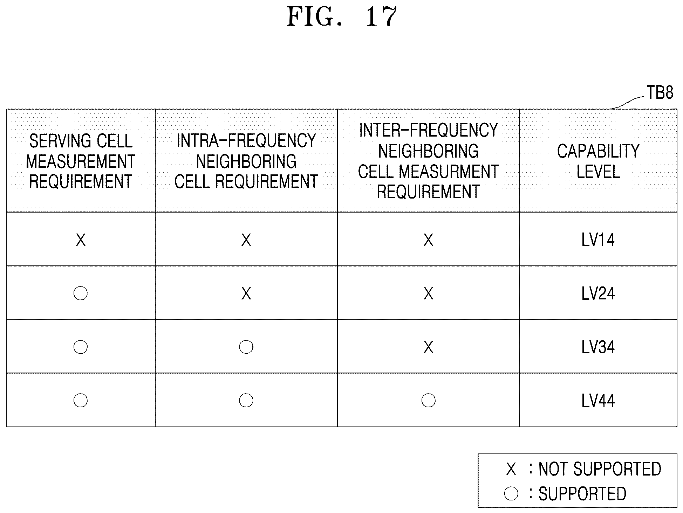

FIG. 17 is a diagram of an eighth table TB8 describing low-power receiver information, according to an embodiment. In FIG. 17, embodiments are described assuming that the low-power receiver supports the RRM measurement for the low-power synchronization signal and the RRM measurement for the SSB. However, this is only an example, and it may be fully understood that embodiments are not limited thereto.

Referring to FIG. 17, the eighth table TB8 may include a serving cell measurement requirement field, an intra-frequency neighboring cell measurement requirement field, an inter-frequency neighboring cell requirement field, and a capability level field.

As an example, the serving cell measurement requirement field may include a field indicating whether the low-power receiver supports the first RRM measurement for the serving cell (e.g., independently supports the first RRM measurement). The intra-frequency neighboring cell measurement requirement field may include a field indicating whether the low-power receiver supports the second RRM measurement for the intra-frequency neighboring cell (e.g., independently supports the second RRM measurement). The inter-frequency neighboring cell measurement requirement field may include a field indicating whether the low-power receiver supports the third RRM measurement for the inter-frequency neighboring cell (e.g., independently supports the third RRM measurement). The capability level field may include a field indicating the performance of the low-power receiver related to the RRM measurement.

For example, when the low-power receiver does not support the first RRM measurement to the third RRM measurement, the capability level may correspond to a first level LV14. When the low-power receiver supports only the first RRM measurement, the capability level may correspond to a second level LV24. When the low-power receiver supports the first RRM measurement and the second RRM measurement, the capability level may correspond to a third level LV34. In addition, when the low-power receiver supports the first RRM measurement to the third RRM measurement, the capability level may correspond to a fourth level LV44.

In an embodiment, the low-power receiver information may refer to one of the first to fourth levels LV14 to LV44, and the terminal may identify the performance of the low-power receiver related to the RRM measurement, based on the low-power receiver information. The performance of the low-power receiver may decrease in the order of fourth level LV44, the third level LV34, the second level LV24, and the first level LV14. For example, performance of the second level LV24 may be less than a performance the third level LV34, and greater than a performance of the first level LV14. Performance of the fourth level LV44 may be greater than the performance of the third level LV34.

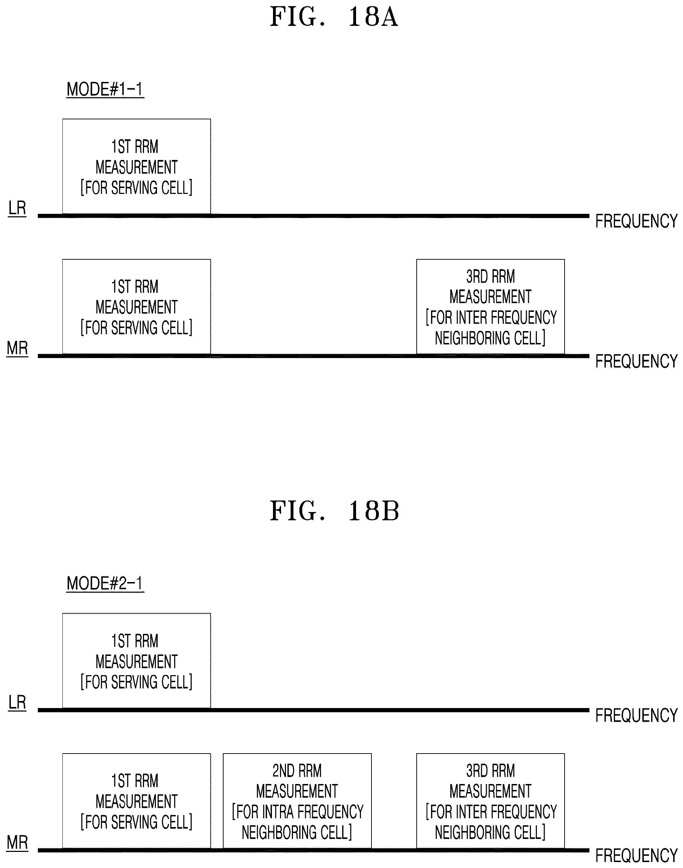

FIGS. 18A to 18E are diagrams describing an embodiment related to first to fifth modes MODE#1-1 to MODE#5-1 included in an operation scheme, according to an embodiment. Based on the low-power receiver information described with reference to FIG. 17, at least two of the first to fifth modes MODE#1-1 to MODE#5-1 and the first to fifth modes MODE#1 to MODE#5 in FIGS. 7A to 7E may be set and included in the operation scheme.

Referring to FIG. 18A, in the first-1 mode MODE#1-1, the low-power receiver LR may perform the first RRM measurement for the serving cell, and the main receiver MR may perform the first RRM measurement for the serving cell and the third RRM measurement for the inter-frequency neighboring cell. As an example, the low-power receiver LR may perform the first RRM measurement for the low-power synchronization signal or the SSB received from the serving cell, and the main receiver MR may perform the first RRM measurement for the SSB received from the serving cell and the third RRM measurement for the SSB received from the inter-frequency neighboring cell. In FIG. 18A, the frequency domain where the third RRM measurement is placed is different from the frequency domain where the first RRM measurement is placed to indicate that the frequency band provided by the inter-frequency neighboring cell is different from the frequency band provided by the serving cell.

Referring further to FIG. 18B, in the second-1 mode MODE#2-1, the low-power receiver LR may perform the first RRM measurement for the serving cell, and the main receiver MR may perform the first RRM measurement for the serving cell, the second RRM measurement for the intra-frequency neighboring cell, and the third RRM measurement for the inter-frequency neighboring cell. As an example, the low-power receiver LR may perform the first RRM measurement for the low-power synchronization signal or the SSB received from the serving cell, and the main receiver MR may perform the first RRM measurement for the SSB received from the serving cell, the second RRM measurement for the SSB received from the intra-frequency neighboring cell, and the third RRM measurement for the SSB received from the inter-frequency neighboring cell. In FIG. 18B, the frequency domain where the third RRM measurement is placed is different from the frequency domain where the second RRM measurement is placed to indicate that the frequency band provided by the inter-frequency neighboring cell is different from the frequency band provided by the intra-frequency neighboring cell.

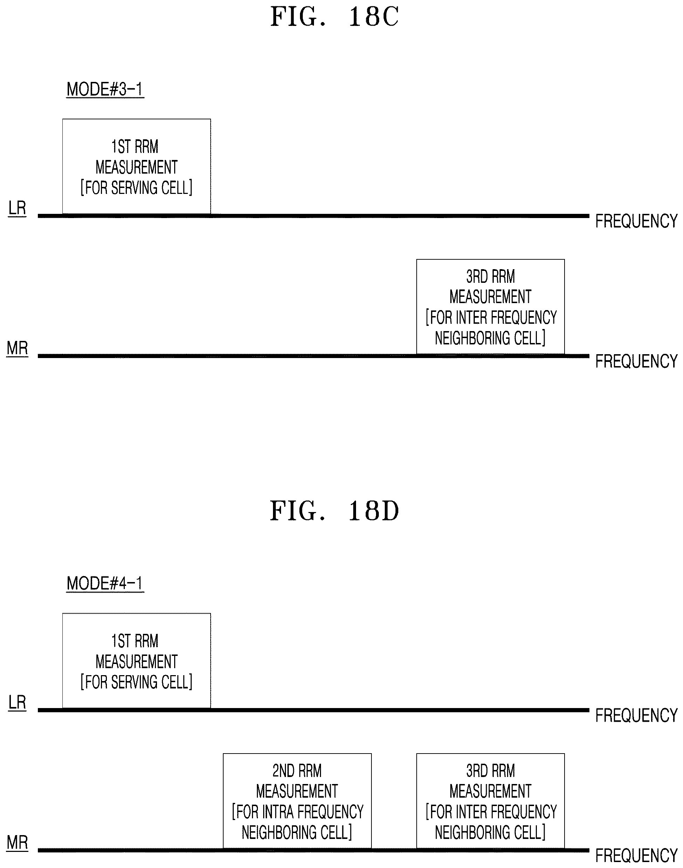

Referring further to FIG. 18C, in the third-1 mode MODE#3-1, the low-power receiver LR may perform the first RRM measurement for the serving cell, and the main receiver MR may perform the third RRM measurement for the inter-frequency neighboring cell. As an example, the low-power receiver LR may perform the first RRM measurement for the low-power synchronization signal or the SSB received from the serving cell, and the main receiver MR may perform the third measurement for the SSB received from the inter-frequency neighboring cell.

Referring further to FIG. 18D, in the fourth-1 mode MODE#4-1, the low-power receiver LR may perform the first RRM measurement for the serving cell, and the main receiver MR may perform the second RRM measurement for the intra-frequency neighboring cell and the third RRM measurement for the inter-frequency neighboring cell. As an example, the low-power receiver LR may perform the first RRM measurement for the low-power synchronization signal or the SSB received from the serving cell, and the main receiver MR may perform the second RRM measurement for the SSB received from the intra-frequency neighboring cell and the third RRM measurement for the SSB received from the inter-frequency neighboring cell.

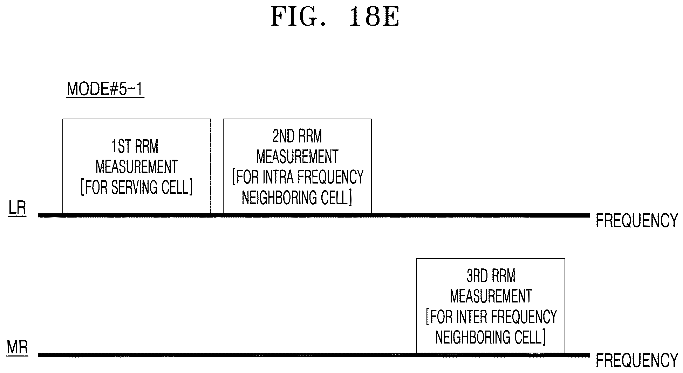

With further reference to FIG. 18E, in the fifth-1 mode MODE#5-1, the low-power receiver LR may perform the first RRM measurement for the serving cell and the second RRM measurement for the intra-frequency neighboring cell, and the main receiver MR may perform the third RRM measurement for the inter-frequency neighboring cell. As an example, the low-power receiver LR may perform the first RRM measurement for the low-power synchronization signal or the SSB received from the serving cell and perform the second RRM measurement for the intra-frequency neighboring cell, and the main receiver MR may perform the third RRM measurement for the inter-frequency neighboring cell.

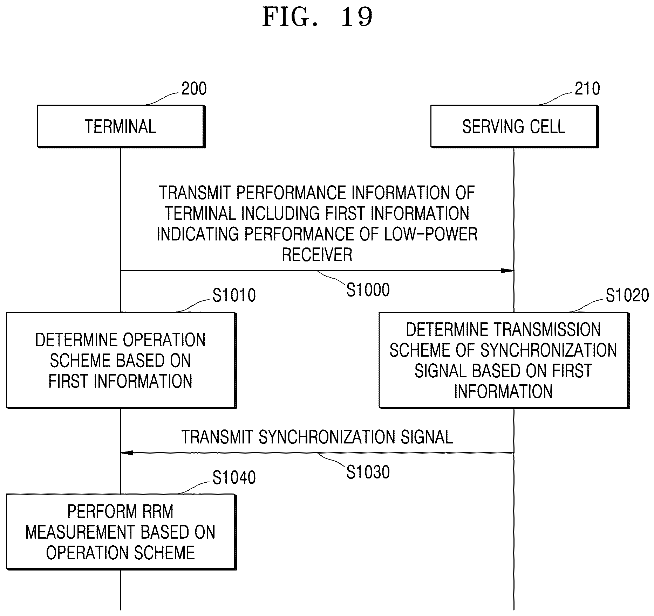

FIG. 19 is a sequence diagram between a terminal 200 and a serving cell 210, according to an embodiment.

Referring to FIG. 19, in operation S1000, the terminal 200 may transmit the performance information of the terminal including the first information indicating the performance of the low-power receiver to the serving cell 210. For example, the terminal 200 may transmit the performance information of the terminal including the first information through radio resource control (RRC) signaling after randomly accessing the serving cell 210. The performance information including the first information may be received at the serving cell 210.

In operation S1010, the terminal 200 may determine the operation scheme for the RRM measurement based on the first information.

In operation S1020, the serving cell 210 may determine the transmission scheme of the synchronization signal based on the first information. As an example, the serving cell 210 may determine the transmission scheme by determining whether to transmit the low-power synchronization signal based on the first information.

In operation S1030, the serving cell 210 may transmit the synchronization signal to the terminal 200 based on the transmission scheme determined in operation S1020. The synchronization signal may be received at the terminal 200.

In addition, in operation S1040, the terminal 200 may perform the RRM measurement based on the operation scheme determined in operation S1010. As an example, the terminal 200 may control the low-power receiver and the main receiver, based on the plurality of modes of the determined operation scheme, to perform the RRM measurement.

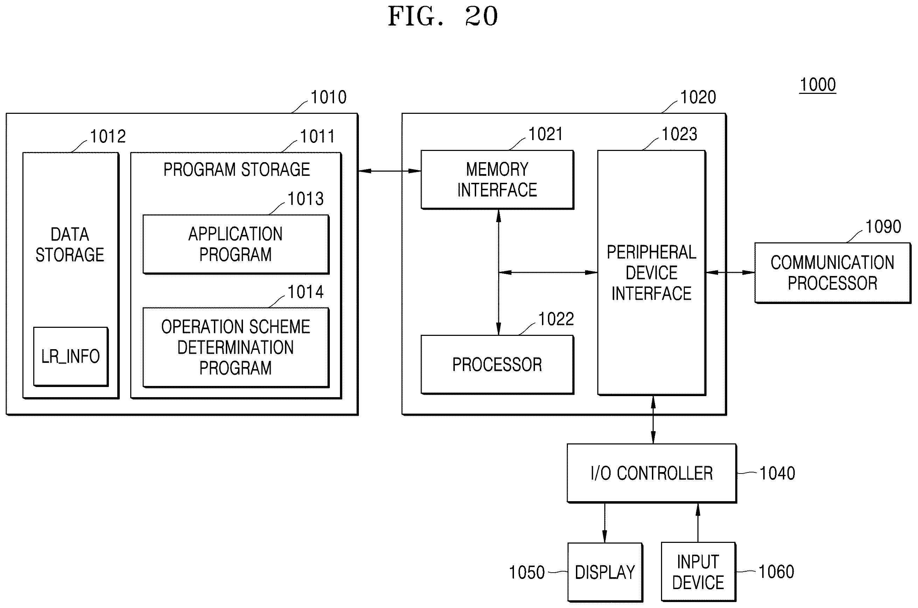

FIG. 20 is a block diagram of an electronic device 1000 according to an embodiment.

Referring to FIG. 20, the electronic device 1000 may include a memory 1010, a processor unit 1020, an input/output controller 1040, a display 1050, an input device 1060, and a communication processor 1090. A plurality of memories 1010 may also be provided. Each component is described as follows.

The memory 1010 may include a program storage 1011 for storing a program for controlling an operation of the electronic device 1000, and a data storage 1012 for storing data generated during program execution. The data storage 1012 may store data used for operations of an application program 1013 and an operation scheme determination program 1014. In an embodiment, the data storage 1012 may include the low-power receiver information LR_INFO used for determining the operation scheme for the RRM measurement, according to embodiments. As an example, the low-power receiver information LR_INFO may refer to the performance of the low-power receiver related to the RRM measurement.

The program storage 1011 may include the application program 1013 and the operation scheme determination program 1014. The program included in the program storage 1011 may be expressed as an instruction set which is a set of instructions. The application program 1013 may include program codes for the performance of various applications operating in the electronic device 1000. That is, the application program 1013 may include codes (or commands) for various applications driven by the processor 1022. The operation scheme determination program 1014 may include control codes for determining the operation scheme for the low-power receiver and the main receiver, according to an embodiment.

In an embodiment, by executing the operation scheme determination program 1014, the processor 1022 may set the plurality of modes of the low-power receiver and the main receiver and set the switching conditions between the plurality of modes to determine the operation scheme for the RRM measurement. The processor 1022 may use the low-power receiver information LR_INFO of the data storage 1012 when performing the corresponding operation. The processor 1022 may control the low-power receiver and the main receiver based on the determined operation scheme to perform the RRM measurement.

The electronic device 1000 may include a communication processor 1090 that performs communication functions for voice communication and data communication. The communication processor 1090 may include the main receiver and the low-power receiver for assisting the operation of the main receiver.

A peripheral device interface 1023 may control the connection between the input/output controller 1040, the communication processor 1090, the processor 1022, and the memory interface 1021. The processor 1022 controls a plurality of cells to provide a corresponding service by using at least one software program. The processor 1022 may execute at least one program stored in the memory 1010 to provide the corresponding service to the program.

The input/output controller 1040 may provide an interface between an input/output device, such as the display 1050 and the input device 1060, and the peripheral device interface 1023. The display 1050 displays state information, input characters, moving pictures, still pictures, and the like. For example, the display 1050 may display application program information driven by the processor 1022.

The input device 1060 may provide input data generated by selection of the electronic device 1000 to the processor unit 1020 through the input/output controller 1040. The input device 1060 may include a keypad including at least one hardware button, a touchpad for sensing touch information, and the like. For example, the input device 1060 may provide touch information, such as touch, touch movement, and touch release, sensed through the touchpad to the processor 1022 through the input/output controller 1040.

According to another aspect of an embodiment, there is provided an operation method of a communication system including a terminal and a serving cell in mutual communication, the operation method including: transmitting, by the terminal, performance information including first information indicating a performance of a low-power receiver of the terminal to the serving cell; determining, by the terminal, an operation scheme for performing RRM measurement using at least one of the low-power receiver and a main receiver of the terminal based on the first information; and determining, by the serving cell, a transmission scheme of transmitting a synchronization signal based on the first information. The operation method of the communication system may further include transmitting, by the serving cell, a synchronization signal based on the determined transmission scheme to the terminal, and performing, by the terminal, RRM measurement for the synchronization signal based on the determined operation scheme.

In addition, in the operation method of the communication system, the determined transmission scheme may include selecting to transmit at least one of a low-power synchronization signal and an SSB as the synchronization signal.

In addition, in the operation method of the communication system, the structural complexity of the low-power receiver may be lower than that of the main receiver.

According to another aspect of an embodiment, there is provided a terminal configured to communicate with a serving cell, the terminal including an RF circuit including a low-power receiver and a main receiver, and a processor configured to set a plurality of modes for the low-power receiver and the main receiver based on whether the low-power receiver supports a first RRM measurement for the serving cell and whether the low-power receiver supports a second RRM measurement for an intra-frequency neighboring cell, wherein the processor is configured to perform at least one of the first RRM measurement and the second RRM measurement, based on one of the plurality of modes, with the low-power receiver alone or together with the main receiver.

In addition, in a terminal according to an embodiment, a plurality of modes include at least two modes among a first mode in which the first RRM measurement is performed by the low-power receiver and the main receiver, a second mode in which the first RRM measurement is performed by the low-power receiver and the main receiver and the second RRM measurement is performed by the main receiver, a third mode in which the first RRM measurement is performed by the low-power receiver, a fourth mode in which the first RRM measurement is performed by the low-power receiver and the second RRM measurement is performed by the main receiver, and a fifth mode in which the first RRM measurement and the second RRM measurement are performed by the low-power receiver. The plurality of modes may include at least two modes among a first mode in which the first RRM measurement is performed by the low-power receiver and the main receiver, a second mode in which the first RRM measurement is performed by the low-power receiver and the main receiver and the second RRM measurement is performed by the main receiver, a third mode in which the first RRM measurement is performed by the low-power receiver, a fourth mode in which the first RRM measurement is performed by the low-power receiver and the second RRM measurement is performed by the main receiver, and a fifth mode in which the first RRM measurement and the second RRM measurement are performed by the low-power receiver.

In addition, in the terminal, the low-power receiver may be configured to receive a low-power wake-up signal from the serving cell and identify a paging instruction, and the main receiver is configured to be woken up based on the paging instruction and receive a paging signal from the low-power receiver.

In addition, in the terminal, the processor may be configured to deactivate at least one of the plurality of modes based on a network environment with the serving cell.

While aspects of embodiments have been particularly shown and described, it will be understood that various changes in form and details may be performed therein without departing from the scope of the following claims.

## Claims

1. A terminal configured to communicate with a serving cell, the terminal comprising:
a radio frequency, RF, circuit (110) comprising a low-power receiver (112) and a main receiver (114);
a memory (130) configured to store first information indicating a performance of the low-power receiver (112); and
a processor (120) configured to determine an operation scheme for performing radio resource management, RRM, measurement using at least one of the low-power receiver (112) and the main receiver (114) based on the first information.

2. The terminal of claim 1, wherein the processor (120) is further configured to determine the operation scheme by setting a plurality of modes related to the low-power receiver (112) and the main receiver (114) based on the first information.

3. The terminal of claim 2, wherein the processor (120) is further configured to set switching conditions between the plurality of modes.

4. The terminal of claim 3, wherein the processor (120) is further configured to control the low-power receiver (112) and the main receiver (114) to operate in a first mode of the plurality of modes, and monitor whether a switching condition corresponding to a next mode of the first mode is satisfied while operating in the first mode.

5. The terminal of claim 4, wherein the processor (120) is further configured to switch from the first mode to the next mode based on the switching condition corresponding to the next mode being satisfied.

6. The terminal of any preceding claim, wherein the memory (130) is configured to further store second information indicating a performance of the serving cell related to operation of the low-power receiver (112), and
wherein the processor (120) is further configured to determine the operation scheme based on the first information and the second information.

7. The terminal of claim 6, wherein the second information indicates whether the serving cell supports transmission of a low-power synchronization signal, and
wherein the first information indicates whether the low-power receiver (112) supports measurement for a synchronization signal block of the serving cell, whether the low-power receiver (112) supports a first RRM measurement for the serving cell, and whether the low-power receiver (112) supports a second RRM measurement for an intra-frequency neighboring cell.

8. The terminal of any preceding claim, wherein the memory (130) is further configured to further store third information about at least one of a structure of the terminal and a network environment of the terminal, and
wherein the processor (120) is further configured to modify the determined operation scheme based on the third information.

9. The terminal of claim 8, wherein the determined operation scheme comprises a plurality of modes related to the low-power receiver (112) and the main receiver (114), and
wherein the processor (120) is further configured to deactivate at least one of the plurality of modes to modify the determined operation scheme.

10. The terminal of any preceding claim, wherein the first information indicates whether the low-power receiver (112) supports a first RRM measurement for the serving cell and whether the low-power receiver supports (112) a second RRM measurement for an intra-frequency neighboring cell.

11. The terminal of claim 10, wherein the processor (120) is further configured to set at least two modes as the operation scheme, based on the first information, and
wherein the at least two modes are identified from among a plurality of modes, and the plurality of modes comprises a first mode in which the first RRM measurement is performed by the low-power receiver (112) and the main receiver (114), a second mode in which the first RRM measurement is performed by the low-power receiver (112) and the main receiver (114) and the second RRM measurement is performed by the main receiver (114), a third mode in which the first RRM measurement is performed by the low-power receiver (112), a fourth mode in which the first RRM measurement is performed by the low-power receiver (112) and the second RRM measurement is performed by the main receiver (114), and a fifth mode in which the first RRM measurement and the second RRM measurement are performed by the low-power receiver (112).

12. The terminal of claim 11, wherein the processor (120) is further configured to:
set the first mode and the second mode as the operation scheme based on the first information indicating that the first RRM measurement and the second RRM measurement are not supported by the low-power receiver (112);
set the first mode to the fourth mode as the operation scheme based on the first information indicating that the first RRM measurement is supported by the low-power receiver (112) and the second RRM measurement is not supported by the low-power receiver (112); and
set the first mode to the fifth mode as the operation scheme based on the first information indicating that the first RRM measurement and the second RRM measurement are supported by the low-power receiver (112).

13. The terminal of claim 10, wherein the first information further indicates that the low-power receiver supports a third RRM measurement for an inter-frequency neighboring cell.

14. The terminal of claim 13, wherein the processor (120) is further configured to set at least two modes as the operation scheme, based on the first information, and
wherein the at least two modes are identified from among a plurality of modes, and the plurality of modes comprises a first mode in which the first RRM measurement is performed by the low-power receiver (112) and the main receiver (114), a second mode in which the first RRM measurement is performed by the low-power receiver (112) and the main receiver (114)and the second RRM measurement is performed by the main receiver (114), a third mode in which the first RRM measurement is performed by the low-power receiver (112), a fourth mode in which the first RRM measurement is performed by the low-power receiver (112) and the second RRM measurement is performed by the main receiver (114), a fifth mode in which the first and second RRM measurements are performed by the low-power receiver (112), a sixth mode in which the first RRM measurement is performed by the low-power receiver (112) and the main receiver (114) and the third RRM measurement is performed by the main receiver (114), a seventh mode in which the first RRM measurement is performed by the low-power receiver (112) and the main receiver (114), and the second and third RRM measurements are performed by the main receiver (114), an eighth mode in which the first RRM measurement is performed by the low-power receiver (112) and the third RRM measurement is performed by the main receiver (114), a ninth mode in which the first RRM measurement is performed by the low-power receiver (112), and the second and third RRM measurements are performed by the main receiver (114), and a tenth mode in which the first and second RRM measurements are performed by the low-power receiver (112) and the third RRM measurement is performed by the main receiver (114).

15. The terminal of any preceding claim, wherein the processor (112) is further configured to transmit capability information including the first information to the serving cell through the RF circuit.
